(19) Europäisches Patentamt / European Patent Office / Office européen des brevets

(11) **EP 1 452 026 B1**

(12) **FASCICULE DE BREVET EUROPEEN**

(45) Date de publication et mention
de la délivrance du brevet:
**25.03.2009 Bulletin 2009/13**

(21) Numéro de dépôt: **02799089.4**

(22) Date de dépôt: **03.12.2002**

(51) Int Cl.:
***H04N 7/167*** *(2006.01)*

(86) Numéro de dépôt international:
**PCT/FR2002/004150**

(87) Numéro de publication internationale:
**WO 2003/049442 (12.06.2003 Gazette 2003/24)**

(54) **PROCEDE DE DISTRIBUTION DE CLES DE DECHIFFREMENT DE DONNEES NUMERIQUES EMBROUILLEES**

VERFAHREN ZUM VERTEILEN VERWÜRFELTER DIGITAL-DATENENTSCHLÜSSELUNGSSCHLÜSSEL

METHOD FOR DISTRIBUTING SCRAMBLED DIGITAL DATA DECRYPTION KEYS

(84) Etats contractants désignés:
**AT BE BG CH CY CZ DE DK EE ES FI FR GB GR IE IT LI LU MC NL PT SE SI SK TR**

(30) Priorité: **05.12.2001 FR 0115721**

(43) Date de publication de la demande:
**01.09.2004 Bulletin 2004/36**

(73) Titulaire: **FRANCE TELECOM**
**75015 Paris (FR)**

(72) Inventeurs:
• **CODET, André**
**F-35000 Rennes (FR)**
• **FEVRIER, Pierre**
**F-35250 St. Sulpice La Fôret (FR)**
• **FONTAINE, No¬l**
**F-35590 St. Gilles (FR)**

(56) Documents cités:
**EP-A- 0 755 154          WO-A-01/95613**

## Description

Domaine technique

L'invention se situe dans le domaine du contrôle d'accès et concerne plus particulièrement un procédé de distribution de clés individuelles pour déchiffrer des données numériques embrouillées transmises par un système de diffusion à une pluralité de terminaux connectés à un réseau d'échange de données, ledit système comportant au moins un portail de réservation destiné à fournir les clé individuelles, au moins une plate-forme d'embrouillage et au moins un serveur destiné à diffuser les données embrouillées.

L'invention concerne également un dispositif destiné à la mise en oeuvre du procédé.

Etat de la technique antérieure

Dans le domaine de la diffusion de données, notamment des données audiovisuelles, la norme DVB (Digital Video Broadcasting en anglais) prévoit un mécanisme de contrôle d'accès dans lequel les informations d'embrouillage/désembrouillage sont transmises aux abonnés avec des messages de contrôle d'accès ECM et EMM (respectivement Entitlement Control Message, et Entitlement Management Message, en anglais) et sont stockées dans une carte à mémoire ou exploitées par celle-ci. Ces informations comportent un mot de contrôle CW chiffré qui change périodiquement toutes les dix secondes par exemple. Un nouveau mot de contrôle correspondant au même programme ou à un nouveau programme est transmis aux abonnés avec les messages de contrôle d'accès ECM.

Les EMM sont transmis avant les programmes auxquels ils s'appliquent et sont mémorisés dans une carte à puce.

Lorsqu'un décodeur reçoit un EMM contenant la clé d'exploitation chiffrée correspondant à son groupe, il vérifie si cette clé est déjà mémorisée. Sinon, la clé d'exploitation est déchiffrée par la fonction inverse de la fonction de chiffrement puis stockée. Généralement le décodeur est constitué d'un terminal et d'une carte à mémoire intégrant le processeur de sécurité. Et lorsque le programme embrouillé est diffusé, la clé d'exploitation est utilisée pour déchiffrer le mot de contrôle CW qui lui est associé et qui est envoyé aux abonnés via les ECM, ou inscrit dès l'initialisation du récepteur.

Dans le système décrit ci-dessus, pour accéder aux programmes embrouillés, un abonné doit disposer d'un équipement qui comporte généralement un processeur de sécurité inclus dans une carte à mémoire contenant les paramètres d'accès définissant les droits d'accès aux programmes embrouillés.

Ce système de contrôle d'accès n'est pas adapté à une diffusion à travers le réseau Internet car il n'est pas envisageable de distribuer un lecteur de carte à puce à chaque utilisateur connecté aux réseaux en raison du nombre important d'abonnés potentiels et de la dispersion géographique de ces abonnés.

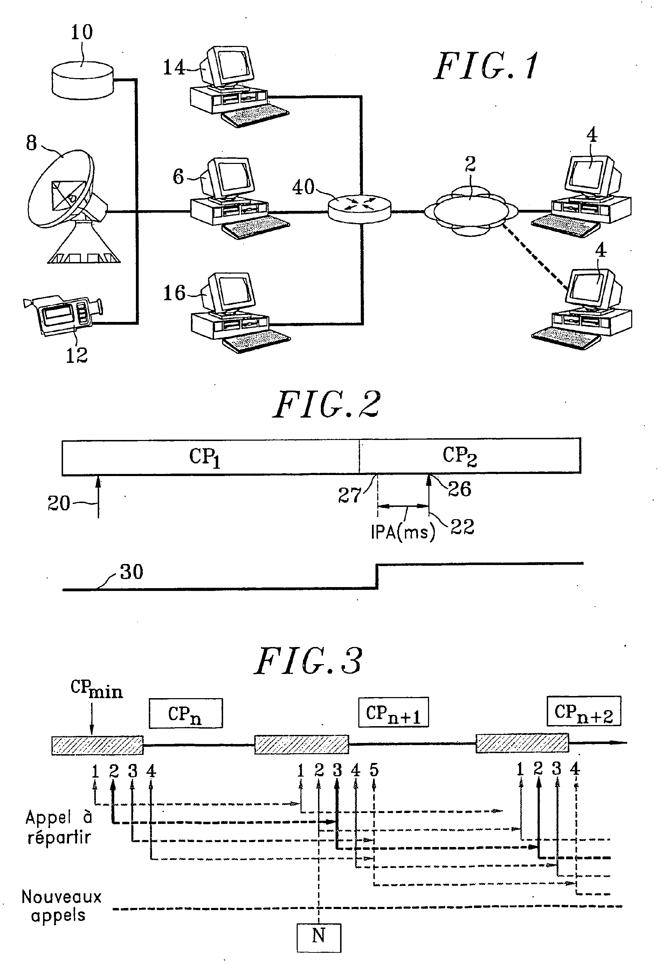

La figure 1 représente schématiquement un système de diffusion à travers le réseau Internet 2 de programmes audiovisuels ou chaînes thématiques embrouillés vers des terminaux 4 ne disposant pas nécessairement de processeur de sécurité.

Ce système est décrit dans une demande de brevet français N° 0113963 intitulée « PROCEDE ET SYSTEME DE DIFFUSION AVEC CONTROLE D'ACCES DE PROGRAMMES CRYPTES DANS UN RESEAU DE TYPE IP » déposée par FRANCE TELECOM le 29/10/2001.

Ce système comporte un serveur de diffusion multicast 6 connecté à une antenne 8 de réception de programmes audiovisuels, ou à une base de données 10 ou encore à une source de programmes télévisuels telle qu'une caméra de prise de vue 12. Le serveur 6 est également connecté à un portail 14 de réservation de programmes audiovisuels et à une plate-forme d'embrouillage 16.

Le portail de réservation 14 est un calculateur comprenant des logiciels permettant de gérer une page de présentation d'une offre commerciale de programmes audiovisuels et de générer des numéros de réservation de droits d'accès à ces programmes.

Le portail 14 comporte également un logiciel cryptographique comportant une fonction G de chiffrement permettant de calculer des clés individuelles.

Les terminaux clients 4 comportent un logiciel utilisant une fonction de déchiffrement permettant la reconstitution des mots de contrôle CW.

La sécurité des transmissions dans ce système repose, d'une part, sur la distribution d'une ou de plusieurs clés individuelles à chaque terminal 4, et d'autre part, sur la diffusion simultanée avec le programme à désembrouiller d'une donnée ALEA1 commune à tous les clients. Le terminal 4 ne peut calculer le mot de contrôle CW qu'après réception de la donnée aléatoire ALEA1, c'est-à-dire seulement à l'instant où il en a besoin pour désembrouiller les données reçues.

L'initialisation de la fonction embrouillage/désembrouillage s'effectue, d'une part avec le mot de contrôle CW, et d'autre part avec une deuxième donnée aléatoire ALEA2, véhiculée dans le signal pour diversifier les séquences d'embrouillage/désembrouillage utilisant un même mot de contrôle CW.

Ainsi, le calcul de CW ne peut se faire sans une clé individuelle et l'adresse individuelle d'un terminal 4. Ceci permet de détecter l'origine d'une duplication illicite de clé individuelle, laquelle est indissociable de l'identifiant unique du terminal 4 auquel elle a été attribuée. Si une telle fraude est détectée, le terminal 4 en faute sera exclu de la distribution des jeux de clés individuelles suivants.

Un problème principal identifié dans les systèmes de l'art antérieur décrit ci-dessus est lié à la congestion du canal de transmission qui résulte du nombre important d'appels à gérer en mode connecté pour distribuer les clés individuelles à chaque utilisateur.

Une première solution, utilisée dans la distribution de programme de télévision à péage, consiste à insérer les clés dans un flux diffusé à tous les récepteurs, chaque récepteur filtre alors le flux reçu pour ne retenir que la clé qui le concerne.

Cette solution présente un inconvénient qui provient du fait que tous les terminaux 4, connectés ou non au réseau, doivent être adressés dans la mesure où il n'est pas possible de détecter la déconnexion d'un terminal dans un contexte de diffusion.

De plus, pour s'assurer que tous les terminaux 4 recevront le message qui les concerne, il est nécessaire de répéter plusieurs fois l'envoi de ces messages. La bande passante nécessaire à la distribution des clés individuelles peut alors devenir très importante par rapport à la bande passante totale disponible.

Le but de l'invention est de pallier les inconvénients de l'art antérieur décrit ci-dessus au moyen d'un procédé permettant une distribution des clés de déchiffrement sans surcharger le portail de réservation quel que soit le nombre de terminaux clients et sans réduire la bande passante utilisée pour la diffusion des données.

Exposé de l'invention

Ces buts sont atteints au moyen d'un procédé comportant les étapes suivantes :

- découper la période d'embrouillage des données transmises en une suite de crypto-périodes $CP_i$ définissant chacune une durée de validité d'une clé individuelle Ki,

et à chaque connexion d'un terminal au portail,

- délivrer à ce terminal un ensemble de clés individuelles comportant au moins une clé correspondant à la crypto-période $CP_i$ et une clé correspondant à la crypto-période $CP_{i+1}$ ainsi que la date d'une connexion ultérieure pour récupérer un ensemble de clés de déchiffrement correspondant à au moins une crypto-période ultérieure si la poursuite de l'accès est autorisée.

Selon l'invention, la durée d'une crypto-période est variable en fonction du nombre de terminaux connectés simultanément au portail de réservation.

Cette durée dépend des capacités du portail de réservation sans pouvoir être toutefois inférieure à une durée minimale $CP_{min}$.

Selon un mode préféré de réalisation de l'invention, la connexion d'un terminal au portail de réservation est initialisée par une requête de connexion transmise du terminal au portail.

Dans un mode particulier de réalisation de l'invention, la requête de connexion est envoyée au cours de la crypto-période courante, et la date de connexion ultérieure qui en résulte est définie par le portail de réservation pour la crypto-période $CP_{i+1}$ ou pour une crypto-période ultérieure.

Cette date est définie par un décalage temporel calculé par rapport à une référence temporelle prédéfinie qui est signalée à chaque terminal $P_i$ par le changement de phase d'un signal spécifique de déclenchement d'appels. Ce signal spécifique de déclenchement d'appels initialise une durée de répartition des appels DRA représentant le temps nécessaire pour traiter les requêtes de connexion survenues au cours d'une crypto-période $CP_i$. Les requêtes de connexion sont prises en compte à partir d'un changement d'état du signal de déclenchement d'appel.

Selon l'invention, le changement de la phase du signal spécifique de déclenchement d'appels est réalisé uniquement si le nombre moyen d'appels NDMA au cours d'une fenêtre temporelle glissante de durée fixe prédéterminée est inférieur à un seuil de déclenchement d'appel SDA prédéterminé.

Selon l'invention, le changement de la crypto-période est réalisé uniquement si la durée d'une crypto-période courante $CP_i$ est supérieure à la durée minimum $CP_{min}$, et si la durée de répartition des appels (DRA) est écoulée.

Dans une application particulière du procédé selon l'invention, les données embrouillées représentent un programme audiovisuel.

Dans une variante de cette application, la durée d'une crypto-période correspond à la durée du programme audiovisuel.

L'invention concerne également un signal de distribution de clés individuelles, un émetteur pour transmettre ce signal, et un récepteur pour recevoir ce signal.

Selon l'invention, le signal comporte une suite de crypto-périodes $CP_i$ définissant chacune une durée de validité d'une clé individuelle Ki, chaque crypto-période étant susceptible de varier entre une durée minimale $CP_{min}$ et une durée maximale $CP_{max}$ en fonction du nombre de terminaux connectés simultanément au réseau.

Selon l'invention, le signal comporte une indication de la date de connexion d'un utilisateur au réseau.

Selon l'invention, ladite date de connexion est définie par un décalage temporel par rapport à une référence temporelle prédéfinie dans le signal.

Selon l'invention, ladite référence temporelle est signalée à chaque terminal par le changement de phase d'un signal spécifique de déclenchement d'appel.

Selon l'invention, ledit signal de déclenchement d'appel initialise une durée de répartition des appels représentant le temps nécessaire pour traiter les requêtes de connexion survenues au cours d'une crypto-période $CP_i$.

Le procédé selon l'invention est mis en oeuvre par un dispositif de distribution de clés individuelles pour déchiffrer des données numériques diffusées par un système de diffusion comprenant un portail de réservation destiné à fournir lesdites clés, une plate-forme d'embrouillage et un serveur des données embrouillées.

Ce dispositif est caractérisé par le fait que le portail de réservation comporte :

- des moyens pour découper la période d'embrouillage des données en une suite de crypto-périodes $CP_i$ définissant chacune une durée de validité d'une clé individuelle de déchiffrement Ki,
- des moyens pour définir pour chaque terminal une date de connexion au portail de réservation et pour délivrer à chaque terminal connecté un ensemble de clés individuelles comportant au moins une clé correspondant à la crypto-période $CP_i$ et au moins une clé correspondant à la crypto-période suivante $CP_{i+1}$, ainsi qu'une date d'une connexion ultérieure pour récupérer un ensemble de clés de déchiffrement correspondant à au moins une crypto-période ultérieure si la poursuite de l'accès est autorisée.

## Brève description des dessins

D'autres caractéristiques et avantages de l'invention ressortiront de la description qui va suivre, prise à titre d'exemple non limitatif, en référence aux figures annexées dans lesquelles :

- La figure 1 représente un système de diffusion dans lequel est mis en oeuvre le procédé selon l'invention ;
- la figure 2 illustre schématiquement le mode de définition d'une référence temporelle pour les dates de connexion au portail de réservation selon l'invention ;
- la figure 3 illustre la répartition des dates définies selon le mode de la figure 2 ;
- la figure 4 illustre schématiquement un chronogramme explicatif présentant d'une part une période (T) chargée de nouveaux appels, et d'autre part, la période où les appels sont répartis ;
- la figure 5 illustre schématiquement un chronogramme explicatif du traitement des appels qui n'ont pas abouti ;
- la figure 6 illustre schématiquement un chronogramme illustrant la variation d'une crypto-période selon l'invention ;
- la figure 7 illustre schématiquement une mise en oeuvre du procédé selon l'invention dans le cas de la diffusion de programmes avec un contenu identifié ;
- la figure 8 illustre schématiquement un chronogramme explicatif de distribution des clés dans les applications de la figure 7 ;
- la figure 9 illustre l'échange d'informations entre le portail de réservation et l'embrouilleur selon l'invention.

## Exposé détaillé de modes de réalisation particuliers

La description qui va suivre sera faite par référence à la figure 1, décrite précédemment, dans le cadre d'une diffusion de programmes audiovisuels, via le réseau Internet 2, à plusieurs terminaux 4 par un serveur de programmes 6.

La période d'embrouillage est découpée en une suite de crypto-périodes $CP_i$ définissant chacune une durée de validité d'une clé individuelle de déchiffrement Ki.

Le changement de crypto-période est signalé par le changement d'état d'un signal spécifique envoyé par le point d'émission à chaque terminal 4.

La caractéristique de ces crypto-périodes $CP_i$ sont définies lors de la création du service de télévision et pour un service donné. Elles sont mémorisées par le portail 14.

Une crypto-période $CP_i$ définie est caractérisée par :

- Une durée minimale $CP_{min}$ qui sera celle de toutes les crypto-périodes créées si le nombre d'utilisateurs connectés est peu important.
- Une durée maximale $CP_{max}$, représentant un seuil d'alarme

La durée $D_i$ d'une crypto-période $CP_i$, exprimée en secondes, est fonction du nombre de terminaux 4 connectés au réseau sans toutefois être inférieure à $CP_{min}$. Si la durée $D_i$ atteint $CP_{max}$, une alarme est alors générée pour alerter le portail 14 que la durée $CP_{max}$ prévue est dépassée pour la population connectée. Le portail 14 déclenche un mécanisme permettant d'augmenter la durée de la crypto-période courante au-delà de cette valeur pour absorber le flux d'appel courant. Un dépassement fréquent de $CP_{max}$ peut être utilisé par l'opérateur pour redimensionner son équipement portail.

Selon une caractéristique essentielle de l'invention, pour récupérer la clé de déchiffrement Ki correspondant à la crypto-période $CP_i$, chaque terminal 4 envoie une requête de connexion au portail 14 pour que ce dernier lui délivre un ensemble de clés individuelles comportant au moins une clé correspondant à la crypto-période $CP_i$ et au moins une clé correspondant à la crypto-période $CP_{i+1}$ ainsi que la date d'une connexion ultérieure pour récupérer un ensemble de clés de déchiffrement correspondant à au moins une crypto-période ultérieure si la poursuite de l'accès est autorisée.

La figure 2 représente schématiquement deux crypto-périodes successives $CP_1$ et $CP_2$. La flèche 20 représente l'instant, dans la crypto-période $CP_1$, de connexion d'un terminal 4 au portail 14, et la flèche 22 indique la date d'appel 26 attribuée par le portail 14 au terminal 4 pour une connexion ultérieure. La date 26 est définie par un décalage temporel IPA fourni dans $CP_1$, calculé à partir d'une date de référence 27 fixée en fonction de la charge du portail 14.

Selon une autre caractéristique de l'invention, la date de référence 27 est signalée à chaque terminal 4 au cours de la crypto-période CP$_2$ par le changement de phase d'un signal spécifique de déclenchement d'appels 30 envoyé par le portail 14 à chaque terminal 4.

Répartition des requêtes des dates d'appels

Afin d'anticiper la présence d'appels pour une nouvelle connexion, au cours d'une crypto-période donnée CP$_i$, le portail 14 calcule les dates des appels ultérieures pour tous les terminaux connectés et planifie les dates calculées dans la crypto-période suivante CP$_{i+1}$.

La figure 3 illustre schématiquement le mécanisme utilisé pour réaliser cette répartition. Dans ce mécanisme, à un appel de rang n au cours de la crypto-période CP$_n$ correspond le rang d'appel n dans la crypto-période CP$_{n+1}$. Si un nouvel appel N intervient au cours de la crypto-période CP$_{n+1}$, il est pris en compte immédiatement.

Dans l'exemple illustré par la figure 3, les dates d'appel de quatre terminaux sont réparties au cours de trois crypto-périodes successives référencées respectivement par CP$_n$, CP$_{n+1}$ et CP$_{n+2}$.

Au premier appel d'un terminal 4 au cours de la crypto-période CP$_n$ correspond le rang 1 dans la crypto-période CP$_{n+1}$, au deuxième appel correspond le rang 2 et ainsi de suite. Le schéma de cette répartition est le suivant :

Crypto-période CP$_n$ :

l'appel 1 est réparti pour CP$_{n+1}$
l'appel 2 est réparti pour CP$_{n+1}$
l'appel 3 est réparti pour CP$_{n+1}$
l'appel 4 est réparti pour CP$_{n+1}$

Crypto-période CP$_{n+1}$:

l'appel 1 est réalisé selon la répartition, il garde le rang 1 pour la crypto-période CP$_{n+2}$ ;
un nouvel appel N prend le rang 2 pour la crypto-période CP$_{n+1}$,et est réparti pour la crypto-période CP$_{n+2}$ ;
l'appel 2 réalisé selon la répartition, prend le rang 3 pour la crypto-période CP$_{n+1}$, et est réparti pour la crypto-période CP$_{n+2}$;
l'appel 3 réalisé selon la répartition, prend le rang 4 pour la crypto-période CP$_{n+1}$, et est réparti pour la crypto-période CP$_{n+2}$ ;
l'appel 4 réalisé selon la répartition, prend le rang 5 pour la crypto-période CP$_{n+1}$, et est réparti pour la crypto-période CP$_{n+2}$ ;

Crypto-période CP$_{n+2}$:

l'appel 1 n'est pas effectué suite par exemple à la déconnexion de l'utilisateur, il n'est plus référencé dans la crypto-période CP$_{n+2}$ ;
l'appel 2 réalisé selon la répartition, prend le rang 1 pour la crypto-période CP$_{n+2}$ , et est réparti pour la crypto-période CP$_{n+3}$ ;
l'appel 3 réalisé selon la répartition, prend le rang 2 pour la crypto-période CP$_{n+2}$ , et est réparti pour la crypto-période CP$_{n+3}$ ;
l'appel 4 réalisé selon la répartition, prend le rang 3 pour la crypto-période CP$_{n+2}$ , et est réparti pour la crypto-période CP$_{n+3}$ ;
Appel 5 réalisé selon la répartition, prend le rang 4 pour la crypto-période CP$_{n+2}$ , et est réparti pour la crypto-période CP$_{n+3}$.

Comme cela a été dit précédemment, la durée d'une crypto-période CP$_i$ peut être modifiée par le portail 14 pour tenir compte de nouvelles requêtes de connexion non planifiées au cours de la crypto-période précédente CP$_1$. Le but de cette variation est d'éviter la surcharge d'appels au niveau du portail 14. Ce principe s'applique aux diffusions de chaînes de télévision et également aux diffusions événementielles dans lesquelles les durées des crypto-périodes sont connues et également aux diffusions événementielles même si dans ce cas les durées estimées d'un événement sont inférieures ou voisines de celles d'une crypto-période.

Au début d'une crypto-période, le portail 14 mesure la densité d'appels et attend que la densité mesurée soit inférieure à un seuil fixé pour déclencher la répartition des requêtes de connexion préalablement planifiées au cours de la crypto-période précédente. Ce principe permet d'absorber de nouvelles requêtes de connexion.

Dans le cas de la diffusion de chaîne TV avec identification des contenus, le changement de crypto-période est imposé au début d'un nouveau contenu, le portail TV dispose alors d'outils lui permettant :

- de mesurer la charge d'appels pour indiquer aux terminaux 4 la référence temporelle 27 à partir de laquelle il pourront se connecter au portail 14 pour obtenir de nouvelles clés individuelles ;
- d'éviter une accumulation des appels non prévisibles et des appels préalablement planifiés.

La date de référence 27 est signalée à chaque terminal 4 par le changement de phase d'un signal spécifique de déclenchement d'appels 30 envoyé par le portail 14 à chaque terminal 4.

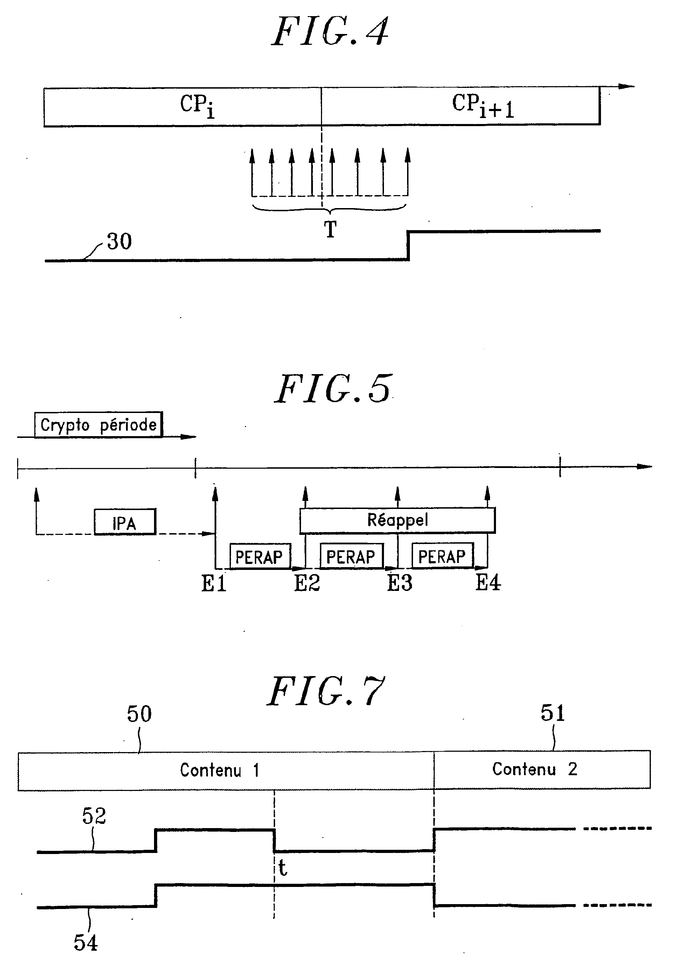

Ce principe est illustré schématiquement par la figure 4.

Cette figure représente schématiquement deux contenus (contenu 1) et (contenu 2) d'un programme audiovisuel, diffusés successivement pendant une crypto-période $CP_i$ et pendant la crypto-période $CP_{i+1}$. Au cours de la période T, plusieurs requêtes de connexion sont envoyées au portail 14 par des terminaux 4 qui souhaitent se connecter pour la première fois pour recevoir un jeu de clés de déchiffrement. La densité d'appels au cours de la période T est mesurée par le portail 14. Cette mesure de la densité d'appels permet d'identifier la période de forte densité d'appels et de la distinguer des périodes de faible densité d'appels de manière à programmer les appels préalablement planifiés dans une période de faible densité d'appels. Dans le cas illustré par la figure 4, le portail 14 répartit les nouvelles requêtes de connexion après un changement de phase du signal 30 qui survient à la fin de la période T.

Dans le cas où le changement de la crypto-période n'est pas imposé par le changement du contenu d'un programme, pour décider des changements de crypto-périodes, le portail 14 applique les règles suivantes :

- la phase d'embrouillage doit avoir une durée au moins égale à la durée minimale $CP_{min}$;
- la répartition des appels planifiés au cours de la crypto-période précédente ainsi que le temps estimé pour d'éventuels réappels doivent être terminés.

Comme cela est expliqué ci-dessus, le changement de la crypto-période, et donc des clés de déchiffrement, est synchronisé avec le changement de phase du signal 30.

Pour programmer des changements de phase du signal 30, il faut que le nombre moyen d'appels reçu dans une fenêtre temporelle glissante de durée fixe, paramétrable par le portail 14, soit inférieur à un seuil prédéfini de déclenchement SDA représentant un nombre d'appels dans un temps donné et dont la valeur dépend essentiellement du portail 14. Ce seuil constitue un indicateur de performance du portail 14.

A cet effet, le portail 14 dispose de plusieurs paramètres lui permettant d'appliquer les règles définies ci-dessus parmi lesquels:

- la durée DRA de répartition des appels, donnée par l'expression:

$$DRA(CP_n) = \Delta n + \varepsilon$$

DRA représente le temps nécessaire au traitement des appels dans une crypto-période augmenté d'un temps de garde $\varepsilon$.

$\Delta n$ = (Nb appels($CP_{n-1}$)* temps de traitement d'un appel) représente la plus grande valeur de décalage d'appel attribuée lors de la crypto-période précédente ;

$\varepsilon$=NEC*PERAP, représente une valeur estimée pour prendre en compte les appels qui n'auraient pas abouti lors d'un premier essai de connexion au portail 14 où :

NEC représente le nombre de tentatives de connexions échouées ;
PERAP représente la périodicité des appels en cas de non-réponse à une demande de connexion.

La figure 5 illustre schématiquement l'estimation de $\varepsilon$ dans le cas de quatre appels E1 à E4 qui n'ont pas abouti. L'estimation du temps de garde $\varepsilon$ prend en compte le temps de réappel maximal attribué au dernier appel réparti.

- Une fenêtre d'échantillonnage NMDA servant à la définition de la référence des appels. Cette fenêtre a une durée fixe et paramétrable au niveau du portail 14. Elle permet de calculer le nombre moyen d'appels reçus dans un temps donné. Ce nombre est ensuite comparé à un seuil de déclenchement des appels SDA pour déterminer les changements d'état du signal 30 de déclenchement des appels. Cette fenêtre est glissante, par pas de 1 seconde.
- le paramètre SDA, décrit précédemment, représente le seuil de déclenchement des appels utilisé par le portail 14 pour traiter l'absorption des appels présents en dehors des appels liés à la répartition prédéfinie avant le changement de contenu.

Les appels reçus pendant une crypto-période devant donner lieu à un réappel, dans le cas d'un abonnement non périmé par exemple, sont répartis à l'intérieur de la durée DRA lors de la crypto-période suivante. La prise en compte des appels à l'intérieur d'une crypto-période s'effectue à partir du changement d'état du 30.

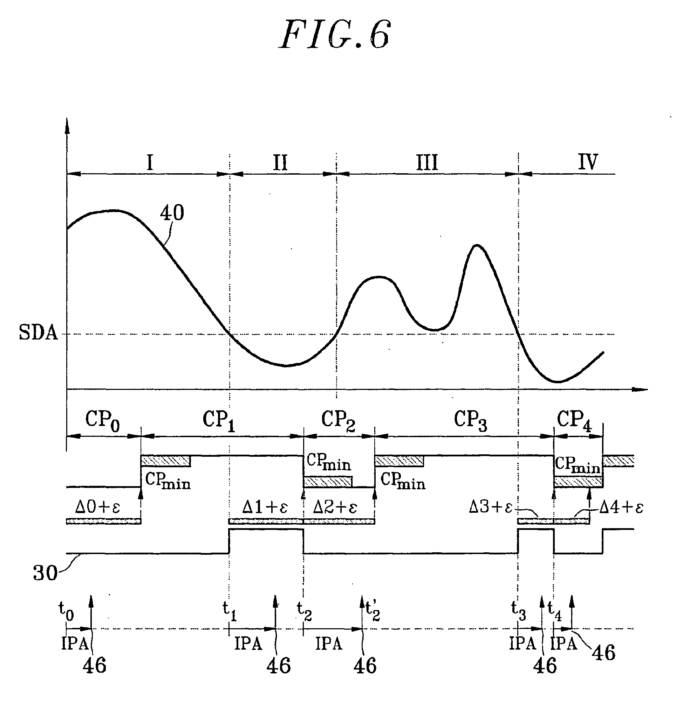

La figure 6 illustre le mécanisme de variation de la crypto-période en fonction des paramètres définis ci-dessus. Sur cette figure, la référence 40 désigne la courbe représentant les variations en fonction du temps du nombre moyen d'appels NMDA reçus par le portail 14. Cette courbe varie autour de la valeur SDA de seuil de déclenchement prédéfini. La référence 46 indique les requêtes de connexion reçues par le portail 14.

Si le nombre moyen d'appels NMDA est inférieur ou égal au seuil de déclenchement des appels SDA, le portail 14 décide de changer la phase du signal 30 de déclenchement des appels, si:

- la crypto-période a une durée au moins égale à la durée minimale CPmin, et
- la répartition des appels planifiés au cours de la crypto-période précédente ainsi que la durée DRA sont terminées.

En référence à la figure 6, les instants $t_i$, (i=0, 1, 2, 3...) représentent la référence 27 à partir de laquelle chaque terminal 4 calcule le décalage temporel IPA à la suite duquel il peut se connecter à nouveau au portail 14 pour récupérer un nouveau jeu de clés de déchiffrement.

Le nombre moyen d'appels NMDA dans l'intervalle I est supérieur au seuil de déclenchement des appels SDA, le portail 14 ne change pas la phase du signal 30 qui reste au niveau bas entre l'instant $t_0$ et l'instant $t_1$.

A cet instant $t_1$, le nombre moyen d'appels NMDA passe en dessous du seuil de déclenchement des appels SDA, le portail 14 commande le changement de phase du signal 30 qui passe au niveau haut à l'instant $t_1$ correspondant à la fin de la durée DRA1+ε.

Le signal 30 reste au niveau haut jusqu'à l'instant $t_2$ situé dans l'intervalle II dans lequel le nombre moyen d'appels NMDA est en dessous du seuil de déclenchement des appels SDA et la durée de la crypto-période $CP_1$ étant supérieure à $CP_{min}$. A cet instant $t_2$, le portail 14 commande le changement de phase du signal 30 qui passe au niveau bas à la fin de la durée DRA1=Δ1+ε.

Dans l'intervalle III, le nombre moyen d'appels NMDA repasse au-dessus du seuil de déclenchement des appels SDA, le portail 14 ne change pas la phase du signal 30 quelle que soit la durée de la crypto-période et quel que soit l'état de la durée DRA3. Le signal 30 reste au niveau bas entre l'instant $t_2$ et l'instant $t_3$.

Dans l'intervalle IV, le nombre moyen d'appels NMDA repasse en dessous du seuil de déclenchement des appels SDA, à l'instant $t_3$, la durée de la crypto-période $CP_3$ dépasse la durée $CP_{min}$, le portail 14 change la phase du signal 30 qui passe au niveau haut à l'instant $t_3$.

Le portail 14 informe l'embrouilleur 16 qui a pour mission d'indiquer ce changement dans le signal 30. Cette transition sert aux terminaux 4 pour appliquer la répartition des appels lors du passage d'une crypto-période à la crypto-période suivante.

Dans le cas particulier de diffusion de chaînes privées avec des contenus identifiés, divers contenus sont adressés dans un même canal à des populations différentes. La problématique rencontrée pour ce type de diffusion est située au niveau des changements de contenus. En effet, selon l'abonnement souscrit ou reçu, toute la population ou une partie de la population aura le droit de visualiser des contenus.

Pour mettre en place ce service, le portail 14 doit connaître les dates de début et la durée de chaque contenu qu'il diffuse. Les principes énoncés ci-dessus restent applicables pour ce type de diffusion.

Selon un mode particulier de réalisation de l'invention, le portail 14 distribue des couples de clés pour le contenu courant et pour le contenu suivant en vérifiant si l'utilisateur demandeur a souscrit un abonnement pour le thème de l'événement suivant.

A cet effet, le portail 14 crée les crypto-périodes variables selon les critères définis ci-dessus pour un même contenu. Cependant, le portail 14 ne crée une nouvelle crypto-période que si le temps restant avant la fin d'un contenu est suffisant pour que la répartition des appels puisse être programmée.

La figure 7 illustre schématiquement le mécanisme de mise en oeuvre de ce mode de réalisation.

Les références 50 et 51 représentent deux contenus successifs diffusés sur un même canal.

Avant d'effectuer le changement de crypto-période, le portail 14 teste si le temps restant avant la fin du contenu est supérieur à la durée $CP_{min}$ + DRA.

La référence 52 représente l'évolution de la crypto-période dans le cas où le temps restant pour la diffusion du contenu 50 est supérieur à $CP_{min}$ + DRA.

Dans ce cas, le portail 14 change la crypto-période à l'instant t.

La référence 54 représente l'évolution de la crypto-période dans le cas où le temps restant pour la diffusion du contenu 50 est inférieur à $CP_{min}$ + DRA.

Dans ce cas, le portail 14 ne change pas la phase du signal 30.

A chaque crypto-période de ce contenu, les utilisateurs connectés demandent la réception du jeu de clés pour la période courante et pour la période suivante. Le portail 14 les calcule et vérifie si l'utilisateur demandeur est abonné pour le type de contenu suivant.

Si l'utilisateur est abonné, le portail 14 calculera le jeu de clés utilisé pour le contenu suivant et enverra les deux jeux de clés à l'utilisateur.

Si l'utilisateur n'est pas abonné, il ne recevra que le jeu de clés du contenu courant.

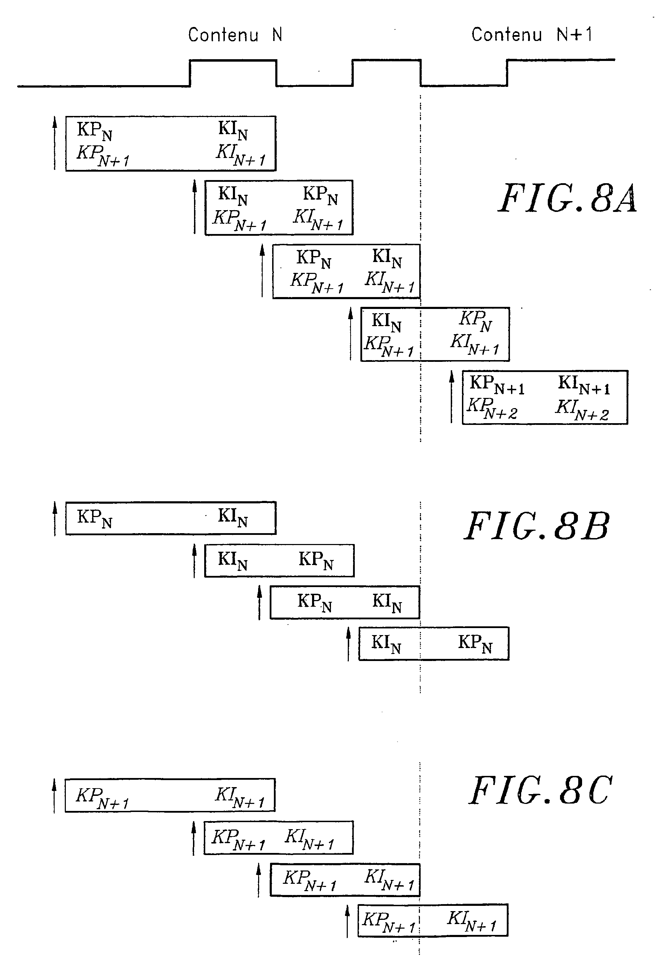

Le mécanisme de distribution des clés est illustré schématiquement par la figure 8.

Pour les nouveaux utilisateurs connectés, le portail 14 distribue :

- Deux paires de clés comportant respectivement deux clés paires et deux clés impaires ($KP_N$, $KP_{N+1}$), ($KI_N$, $KI_{N+1}$) si l'utilisateur est abonné aux contenus courant et suivant, comme on peut le voir à la figure 8A.

- Une paire de clés comportant respectivement une clé paire et une clé impaire ($KP_N$, $KI_N$), pour le contenu courant, s'il n'est pas abonné au contenu suivant, comme on peut le voir à la figure 8B.

- Une paire de clés respectivement ($KP_{N+1}$, $KI_{N+1}$), contenant une clé paire et une clé impaire pour le contenu suivant, s'il n'est pas abonné au contenu courant comme on peut le voir à la figure 8C.

Un signal sera émis lors de chaque transition de contenu. A partir de celui-ci, le terminal 4 détermine quel jeu de clés est utilisé pour désembrouiller les contenus.

Le portail 14 envoie un jeu de clés complet pour le contenu suivant car il ne connaît pas à priori la parité de la phase au début du contenu suivant. Pour que le terminal 4 puisse connaître sans ambiguïté la clé affectée à une parité donnée, le jeu de clés envoyé pour le contenu suivant sera toujours de la forme : Clé paire $_{N+1}$, Clé impaire $_{N+1}$

Dialogue portail 14-Embrouilleur

Pour mettre en oeuvre ce fonctionnement, le portail 14 doit informer l'embrouilleur 16 à chaque crypto-période :

- Des changements de phase d'embrouillage ;
- Des changements de phase des déclenchements d'appels ;
- Des changements de phase d'embrouillage et de contenus.

Le portail 14 doit également demander à l'embrouilleur 16 les paramètres d'embrouillage (ALEA1 + CW) qui seront utilisés pour la crypto-période suivante.

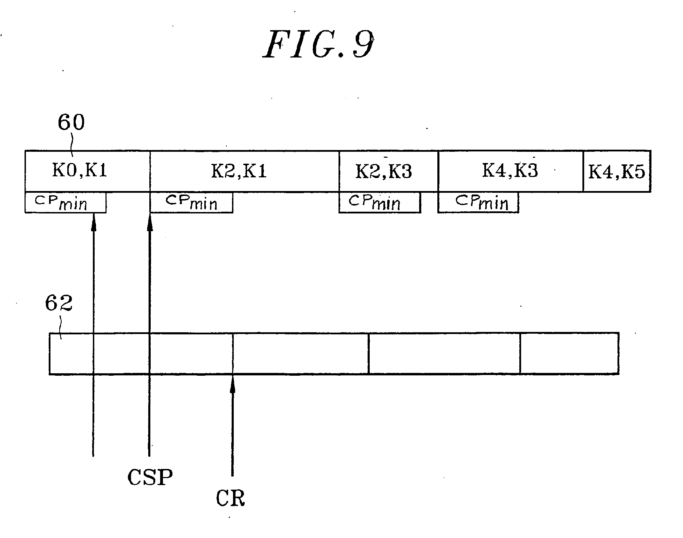

La figure 9 illustre schématiquement les échanges entre le portail 14 et l'embrouilleur au cours d'une diffusion.

La référence 60 représente les crypto-périodes successives avec les clés de déchiffrement correspondantes, et la référence 62 représente les phases déclenchement d'appels.

Le portail 14 envoie à l'embrouilleur 16 les requêtes suivantes:

- CR (Call_Reference) : cette fonction permet d'indiquer à l'embrouilleur 16 le changement de phase du signal 30 de déclenchement d'appels.

CSP (Change_Scrambling_Phase) : cette fonction permet à l'embrouilleur de changer la phase d'embrouillage.

CP (Create_Profile_CA) : cette fonction permet de demander à l'embrouilleur 16 les paramètres d'embrouillage qui seront valides dans une crypto-période à venir. En retour, l'embrouilleur 16 fournit au portail 14 les paramètres ALEA1 et CW demandés. Cette demande doit être déclenchée avant la fin de la durée minimale d'une crypto-période $CP_{min}$.

Calculs effectués par le portail 14

Le portail 14 comporte des modules informatiques pour :

- Calculer la durée de chaque crypto-période ;
- Calculer le nombre d'appels reçus pendant une crypto-période
- Calculer le nombre moyen d'appels reçus afin de déclencher la répartition des appels ; ce nombre est ensuite comparé avec le seuil SDA.

Traitement des appels sans réponse

Les terminaux 4 appellent régulièrement le portail 14 pour récupérer les clés individuelles. Si un appel n'aboutit pas, la stratégie des répétitions d'appels est la suivante :

- Le nombre d'essais de reconnexion est limité à NEC appels (3 par exemple).
- La périodicité de ces essais est de PERAP minutes (2 ou 3 par exemple). Cette répétition a une influence pour estimer le paramètre $\varepsilon$ lié à la durée de répartition des appels DRA.

**Revendications**

1. Procédé de distribution de clés individuelles pour déchiffrer des données numériques embrouillées transmises par un système de diffusion à une pluralité de terminaux connectés à un réseau (2) d'échange de données, ledit système de diffusion comportant au moins un portail (14) destiné à fournir les clés individuelles, au moins une plate-forme d'embrouillage (16) et au moins un serveur (6) destiné à diffuser les données embrouillées, procédé **caractérisé en ce qu'**il comporte les étapes suivante :

   - découper la période d'embrouillage des données transmises en une suite de crypto- périodes $CP_i$ définissant chacune une durée de validité d'une clé individuelle $K_i$,

   et à chaque connexion d'un terminal (4) au portail (14),

   - délivrer à ce terminal (4) un ensemble de clés individuelles comportant au moins une clé correspondant à la crypto-période $CP_i$ et au moins une clé correspondant à la crypto-période $CP_{i+1}$ ainsi que la date d'une connexion ultérieure pour récupérer un ensemble de clés de déchiffrement correspondant à au moins une crypto-période ultérieure.

2. Procédé selon la revendication 1, **caractérisé en ce que** la durée d'une crypto-période est au moins égale à une durée minimale $CP_{min}$ et dépend du nombre de terminaux connectés simultanément au portail (14).

3. Procédé selon la revendication 2, **caractérisé en ce que** la durée d'une crypto-période est comparée en permanence à une valeur de seuil $CP_{max}$, et **en ce qu'**un signal d'alarme est généré par le portail (14) lorsque la durée de la crypto-période atteint $CP_{max}$.

4. Procédé selon la revendication 3, **caractérisé en ce que** la connexion d'un terminal (4) au portail (14) est initialisée par une requête transmise du terminal (4) au portail (14) et **en ce que** la date d'une connexion ultérieure est définie par le portail (14).

5. Procédé selon la revendication 4, **caractérisé en ce que** la date de la requête de connexion ultérieure est définie par un décalage temporel par rapport à une référence temporelle définie en fonction de la charge du portail (14).

6. Procédé selon la revendication 5, **caractérisé en ce que** ladite référence temporelle est signalée à chaque terminal (4) par le changement de phase d'un signal spécifique (30) de déclenchement d'appels.

7. Procédé selon la revendication 6, **caractérisé en ce que** le signal (30) initialise une durée de répartition des appels (DRA) représentant le temps nécessaire pour traiter les requêtes de connexion au cours d'une crypto-période $CP_i$.

8. Procédé selon la revendication 7, **caractérisé en ce que** les requêtes de connexion ne sont prises en compte par le terminal qu'à partir d'un changement d'état du signal de déclenchement d'appel.

9. Procédé selon la revendication 8, **caractérisé en ce que** le portail (14) mesure le nombre moyen de requêtes de connexion au cours d'une fenêtre temporelle glissante, de durée fixe, par comptage des nombres d'appels reçus au cours de ladite fenêtre temporelle.

10. Procédé selon la revendication 8, **caractérisé en ce que** le changement de la phase du signal spécifique de déclenchement d'appels (30) est réalisé uniquement lorsque le nombre d'appels est inférieur à un seuil de déclenchement d'appel SDA prédéterminé.

11. Procédé selon la revendication 10, **caractérisé en ce que** le changement de la crypto-période est réalisé uniquement si la durée d'une crypto-période $CP_i$ est supérieure à la durée minimum $CP_{min}$, et si la durée de répartition des appels (DRA) est écoulée.

12. Procédé selon l'une des revendications 1 à 10, **caractérisé en ce que** les données embrouillées représentent un programme audiovisuel.

13. Procédé selon la revendication 10, **caractérisé en ce que** la durée d'une crypto-période correspond à la durée du programme audiovisuel.

## Claims

1. Method of distributing individual keys for decrypting scrambled digital data transmitted by a broadcasting system to a plurality of terminals connected to a data interchange network (2), said broadcasting system comprising at least one portal (14) designed to supply the individual keys, at least one scrambling platform (16) and at least one server (6) designed to broadcast the scrambled data, the method being **characterized in that** it comprises the following steps:

   - dividing up the scrambling period of the transmitted data into a series of crypto-periods $CP_i$, each defining a validity time of an individual key Ki, and, each time a terminal (4) connects to the portal (14),
   - delivering to this terminal (4) a set of individual keys comprising at least one key corresponding to the crypto-period $CP_i$ and at least one key corresponding to the crypto-period $CP_{i+1}$, and the date of a subsequent connection to recover a set of decryption keys corresponding to at least one subsequent crypto-period.

2. Method according to Claim 1, **characterized in that** the duration of a crypto-period is at least equal to a minimum period $CP_{min}$ and depends on the number of terminals simultaneously connected to the portal (14).

3. Method according to Claim 2, **characterized in that** the duration of a crypto-period is constantly compared to a threshold value $CP_{max}$, and **in that** an alarm signal is generated by the portal (14) when the duration of the crypto-period reaches $CP_{max}$.

4. Method according to Claim 3, **characterized in that** the connection of a terminal (4) to the portal (14) is initialized by a request transmitted from the terminal (4) to the portal (14) and **in that** the date of a subsequent connection is defined by the portal (14).

5. Method according to Claim 4, **characterized in that** the date of the subsequent connection request is defined by a time offset relative to a time reference defined according to the load on the portal (14).

6. Method according to Claim 5, **characterized in that** said time reference is signalled to each terminal (4) by the change of phase of a specific call triggering signal (30).

7. Method according to Claim 6, **characterized in that** the signal (30) initializes a call distribution time (DRA) representing the time needed to handle the connection requests during a crypto-period $CP_i$.

8. Method according to Claim 7, **characterized in that** the connection requests are taken into account by the terminal only from a change of state of the call triggering signal.

9. Method according to Claim 8, **characterized in that** the portal (14) measures the average number of connection requests during a sliding time window, of fixed duration, by counting numbers of calls received during said time window.

10. Method according to Claim 8, **characterized in that** the change of phase of the specific call triggering signal (30) is performed only when the number of calls is less than a predetermined call triggering threshold SDA.

11. Method according to Claim 10, **characterized in that** the change of crypto-period is performed only if the duration of a crypto-period $CP_i$ is greater than the minimum duration $CP_{min}$, and if the call distribution time (DRA) has elapsed.

12. Method according to one of Claims 1 to 10, **characterized in that** the scrambled data represent an audiovisual programme.

13. Method according to Claim 10, **characterized in that** the duration of a crypto-period corresponds to the duration of the audiovisual programme.

**Patentansprüche**

1. Verfahren zur Ausgabe von Einzelschlüsseln zum Entschlüsseln verwürfelter digitaler Daten, die von einem Verbreitungssystem an mehrere Endgeräte übertragen werden, welche mit einem Datenaustauschnetzwerk (2) verbunden sind, wobei das Verbreitungssystem mindestens ein Portal (14), das dazu bestimmt ist, die Einzelschlüssel zu liefern, mindestens eine Verwürfelungsplattform (16) und mindestens einen Server (6) aufweist, der dazu bestimmt ist, die verwürfelten Daten zu verbreiten, wobei das Verfahren **dadurch gekennzeichnet ist, dass** es die folgenden Schritte aufweist:

- Zerhacken der Verwürfelungsperiode der übertragenen Daten in eine Folge von Kryptoperioden $CP_i$, die je eine Gültigkeitsdauer eines Einzelschlüssels Ki definieren,

und bei jeder Verbindung eines Endgeräts (4) mit dem Portal (14),

- Liefern an dieses Endgerät (4) eines Satzes von Einzelschlüsseln, der mindestens einen der Kryptoperiode $CP_i$ entsprechenden Schlüssel und mindestens einen der Kryptoperiode $CP_{i+1}$ entsprechenden Schlüssel sowie das Datum einer späteren Verbindung aufweist, um einen Satz von Entschlüsselungsschlüsseln zu gewinnen, der mindestens einer späteren Kryptoperiode entspricht.

2. Verfahren nach Anspruch 1, **dadurch gekennzeichnet, dass** die Dauer einer Kryptoperiode mindestens gleich einer Mindestdauer $CP_{min}$ ist und von der Anzahl von gleichzeitig mit dem Portal (14) verbundenen Endgeräten abhängt.

3. Verfahren nach Anspruch 2, **dadurch gekennzeichnet, dass** die Dauer einer Kryptoperiode permanent mit einem Schwellwert $CP_{max}$ verglichen wird, und dass ein Alarmsignal vom Portal (14) erzeugt wird, wenn die Dauer der Kryptoperiode $CP_{max}$ erreicht.

4. Verfahren nach Anspruch 3, **dadurch gekennzeichnet, dass** die Verbindung eines Endgeräts (4) mit dem Portal (14) durch eine vom Endgerät (4) zum Portal (14) übertragene Anforderung initialisiert wird, und dass das Datum einer späteren Verbindung vom Portal (14) definiert wird.

5. Verfahren nach Anspruch 4, **dadurch gekennzeichnet, dass** das Datum der späteren Verbindungsanforderung durch eine zeitliche Verzögerung bezüglich einer Zeitreferenz definiert wird, die in Abhängigkeit von der Belastung des Portals (14) definiert wird.

6. Verfahren nach Anspruch 5, **dadurch gekennzeichnet, dass** die Zeitreferenz jedem Endgerät (4) durch die Phasenänderung eines spezifischen Rufauslösesignals (30) mitgeteilt wird.

7. Verfahren nach Anspruch 6, **dadurch gekennzeichnet, dass** das Signal (30) eine Verteilungsdauer der Anrufe (DRA) initialisiert, die die Zeit darstellt, die zur Verarbeitung der Verbindungsanforderungen während einer Kryptoperiode $CP_i$ notwendig ist.

8. Verfahren nach Anspruch 7, **dadurch gekennzeichnet, dass** die Verbindungsanforderungen vom Endgerät erst ab einer Zustandsänderung des Rufauslösesignals berücksichtigt werden.

9. Verfahren nach Anspruch 8, **dadurch gekennzeichnet, dass** das Portal (14) die mittlere Anzahl von Verbindungsanforderungen während eines gleitenden Zeitfensters festgelegter Dauer durch Zählen der Anzahl von während des Zeitfensters empfangenen Anrufen misst.

10. Verfahren nach Anspruch 8, **dadurch gekennzeichnet, dass** die Änderung der Phase des spezifischen Rufauslösesignals (30) nur durchgeführt wird, wenn die Anzahl von Anrufen geringer als eine vorbestimmte Rufauslöseschwelle SDA ist.

11. Verfahren nach Anspruch 10, **dadurch gekennzeichnet, dass** die Änderung der Kryptoperiode nur durchgeführt wird, wenn die Dauer einer Kryptoperiode $CP_i$ größer ist als die Mindestdauer $CP_{min}$, und wenn die Verteilungsdauer der Anrufe (DRA) abgelaufen ist.

12. Verfahren nach einem der Ansprüche 1 bis 10, **dadurch gekennzeichnet, dass** die verwürfelten Daten ein audiovisuelles Programm darstellen.

13. Verfahren nach Anspruch 10, **dadurch gekennzeichnet, dass** die Dauer einer Kryptoperiode der Dauer des audiovisuellen Programms entspricht.

## FIG.1

## FIG.2

## FIG.3

## *FIG.4*

| $CP_i$ | $CP_{i+1}$ |
|---|---|

T

30

## *FIG.5*

Crypto période

IPA

Réappel

PERAP   PERAP   PERAP

E1     E2     E3     E4

## *FIG.7*

50                                    51

| Contenu 1 | Contenu 2 |
|---|---|

52

t

54

# FIG.6

FIG.8A

FIG.8B

FIG.8C

# FIG.9

60

| K0,K1 | K2,K1 | K2,K3 | K4,K3 | K4,K5 |
|-------|-------|-------|-------|-------|

$CP_{min}$  $CP_{min}$  $CP_{min}$  $CP_{min}$

62

CSP

CR

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0113963